# EUROPEAN PATENT SPECIFICATION

(11) **EP 2 135 887 B1**
(45) Date of publication and mention of the grant of the patent: **22.12.2010**
(21) Application number: 08011038.0
(22) Date of filing: 18.06.2008
(51) Int. Cl.: C08G 63/08, C08J 3/00, C08J 3/12

(54) **Process for producing a polylactic acid stereocomplex powder**
Verfahren zur Herstellung eines polylaktischen Säurestereokomplex-Pulvers
Procédé de production de poudre stéréocomplexe d'acide polylactique

(43) Date of publication of application: 23.12.2009
(73) Proprietor: Instytut Biopolimeròw I Wlókien Chemicznych, 90-570 Lodz (PL)
(72) Inventor: Grzebieniak, Karolina, 95054 Ksawerow (PL); Tomaszewski, Waclaw, 95100 Zgierz (PL); Ciechanska, Danuta, 93355 Lodz (PL)
(74) Representative: Beetz, Tom

(56) References cited:
- US-A- 4 766 182
- US-A- 5 317 064

## Description

The invention relates to a process for producing a polylactic acid stereocomplex powder.

There is a growing demand for biodegradable polymers with suitable mechanical, thermal and other useful properties. Among others, polylactic acid with adequately high melting point and thermal resistance seems to be an excellent polymeric material having the ability to produce the useful forms like fibers, films, and others.

Polylactic acid stereocomplexes and their preparation are described in US Patent No 4,719,746; 4,766,182; 4,800,219; 4,902,515; and 4,981,696, and in WO 99/36100. These methods comprise direct contacting poly L-lactic acid with poly D-lactic acid in solid phase at a temperature below their melting point followed by heating the combination at a temperature above the melting point of the lowest melting component. These patents and patent application also describe the dissolution of poly L-lactic acid and poly D-lactic acid in different solvents such as dichloromethane or chloroform with rapid stirring for prolonged times at ambient temperature. Then the solvent is evaporated over a long period of time or the stereocomplex is precipitated from the solution by pouring under rapid stirring into another organic solvent like methanol as precipitant. The polylactic acid stereocomplex is also obtained by gelatinization of a solution containing both enantiomers at ambient temperature, which solution is obtained in solvent such as chloroform, tetrachloroethane, sulfolane, dimethylformamide or N-methylpyrrolidone. The polylactic acid stereocomplex is also obtained by long lasting racemic crystallization and self-precipitation of the stereocomplex particles from the solution of both enantiomers in solvent such as acetonitrile (a) and chloroform (b) with respective conditions: (a) temperature up to 60 °C and polymer concentration up to 3% and (b) at ambient temperature and concentration up to 6.5%. The obtained polylactic acid stereocomplex is characterized by a melting point ranging from 210 to 240 °C, i.e. by 40-60 °C higher than the melting point of individual polylactic acid polymers.

In EP 1731633 poly L-lactic acid and poly D-lactic acid were dissolved and the stereocomplex was spun to a fiber by electrospinning without being isolated.

In US 5,010,145 poly L-lactic acid and poly D-lactic acid were mixed in a solution and the solution was directly wet or dry spun into a fiber without isolation of the complex. H. Tsuji et al., Macromolecules, Vol.24, p. 5651 - 5656 (1999), describe the preparation of films of polylactic acid stereocomplex formed from separately prepared solutions of poly L-lactic acid and poly D-lactic acid in dichloromethane, chloroform, benzene, and dioxane in concentration of 1 g/dL, admixed under vigorous stirring. The mixing ratio of the solutions was fixed at 1 : 1 volume. The mixed solutions were cast onto a flat glass plate, and the solvent was allowed to evaporate at ambient temperature for 1 week. The resulting films were dried under vacuum for another week. The obtained polylactic acid stereocomplex was characterized by a melting point of about 230 °C.

H. Tsuji et al., Macromolecules, vol. 24, p. 5657 - 5662 (1991) also describe stereocomplex formation by precipitating a mixed solution of poly L-lactic acid and poly D-lactic acid. Complex polymer blends were obtained by dissolving each of the polymers in concentration of 1 g/dL in dichloromethane, chloroform, benzene, or dioxane. Then the polymer was precipitated with methanol, and stirring was applied at a rate of approx. 200 rpm for 0.5 h to force the poly L-lactic acid and poly D-lactic acid chains to collide with each other and to effectively remove the solvent from the precipitate. The resulting stereocomplex was distinguished by a melting point of about 230 °C.

Japanese patent application 2005-290257 describes the use of a fine polylactic acid stereocomplex additive as a crystal nucleating agent in producing the poly L-lactic acid moldings. A fine stereocomplex powder with average particle diameter of 5 micrometers was obtained by precipitation of low-concentrated solution of the mixed poly L-lactic acid and poly D-lactic acid. 1 Part of the mixed poly(lactic acids) in 200 parts of chloroform, in a large excess of methanol (50-fold the volume of the solution) was used.

US Patent No 5,317,064 describes the manufacture of polylactide stereocomplex by mixing poly L-lactide and D- lactide or poly D-lactide and L-lactide and a lactide polymerization catalyst and heating to polymerize D-lactide or L-lactide in the melt under pressure. The heating temperature was from 95 to 200 °C at pressure of 1.4 MPa to 700 MPa. The resulting stereocomplex was characterized by a melting temperature 213 - 233 °C.

Japanese patent application 2000-017163 describes a method for preparing polylactic acid stereocomplex composition obtained by melting blends of copolymers of L-lactic and D-lactic acids in the weight ratio ranging from 10 : 90 to 90 : 10. Japanese patent application 2000-017164 describes a method for producing polylactic acid stereocomplex by mixing pellets of poly L-lactic acid or its copolymer containing up to 30 mole% D-lactic acid units with pellets of poly D-lactic acid or its copolymer containing up to 30 mole% of L-lactic acid units wherein at last one of the pellets is crystallized, and then heating the blend up to melting temperature. The weight mixing ratio of poly L-lactic acid and poly D-lactic acid was in the range of 10 : 90 to 90 : 10.

Japanese patent application 2002-030208 describes a polylactic acid stereocomplex resin composition having high heat and hydrolysis resistance obtained by melt blending poly L-lactic acid and poly D-lactic acid wherein at least a part of the carboxyl terminal groups of the polylactic acids are blocked by carbodiimide, epoxy, oxazoline, oxazine or aziridine compounds, molding goods thereof to produce fibers and the like by a melt spinning method. Japanese patent application 2002-030523 describes high strength and high heat resistant poly(lactic) fibers **characterized in that** these fibers having a tenacity of more than 26 cN/tex are obtained by a melt spinning method from a blend of poly L-lactic acid and poly D-lactic acid forming the polylactic acid stereocomplex during spinning process.

Japanese patent application 2003 -105629 describes the polylactic acid stereocomplex fibers obtained from a spinning process with the crystal fusion initiation temperature being at the level of 190 °C or more.

Japanese patent application 2003-293220 describes a method for manufacturing fibers from polylactic acid stereocomplex by blending poly L-lactic acid and poly D-lactic acid in a quiescence kneading machine. The melt spinning process was carried out at temperature 200 - 250 °C with winding speed in range 3500-12000 m/min generating the stereocomplex during spinning.

The present invention relates to a process for producing a polylactic acid stereocomplex composition as a powder, comprising the steps:
a) mixing poly L-lactic acid and poly D-lactic acid in the presence of a high-boiling solvent having a boiling point above 100 °C wherein the polymer concentration is at least 15 wt%, and the weight ratio of poly L-lactic acid : poly D-lactic acid is from 60 : 40 to 40 : 60, at a temperature above 90 °C for 1-120 minutes;
b) bringing the mixture of step a) to a temperature between room temperature and 120 °C to obtain solid material;
c) isolating the solid material from the solvent to give the polylactic acid stereocomplex as a powder.

In step a) heating of the mixture of dope containing poly L-lactic acid and poly D-lactic acid with homogenization can be performed at temperatures up to 170 °C with the polymer concentrations not lower than 1 wt% each, and at least 15 wt% in total, most preferably 20-25 wt%, in a high-boiling solvent such as diphenyl ether or dichlorobenzene. The heating/homogenization is conducted for a time not shorter than 1 minute, preferably in the presence of an inert gas, such as under nitrogen atmosphere to eliminate the thermo-oxidation of the polylactic acid polymers. Usually heating is performed in the range 90-160 °C preferably at 100-140 °C. Most preferably poly L-lactic acid and poly D-lactic acid are used in (about) equivalent molar ratio. It is favorable if during this step the mixture is agitated and, preferably also during the cooling of the blend, particularly in the temperature range in which precipitation of polylactic acid stereocomplex is most effective. A moderate mixing speed just to keep the mixture in motion, e.g. 100 to 200 rpm, is sufficient.

After cooling (if necessary), removal of solvent, optional purification and drying, the polylactic acid stereocomplex is eventually obtained as a powder. Preferably, the solid material is purified from the solvent in step c) by washing with a liquid wherein the solid material is insoluble, like ethanol or methanol, followed by washing with petroleum ether, or by washing with acetone followed by washing with petroleum ether.

The mixing step of this process (step a) can be performed in various ways. In one embodiment poly L-lactic acid is blended with poly D-lactic acid in a high boiling solvent. In another embodiment a solution of poly L-lactic acid in a high boiling solvent is blended with a solution of poly D-lactic acid in the same or another high boiling solvent. In a third embodiment post-polycondensation dopes of poly L-lactic acid and poly D-lactic acid are blended in the form of a cooled heterogeneous mass and then heated to form the stereocomplex. Another embodiment includes a possibility of applying post-polycondensation solutions of poly L-lactic acid and poly D-lactic acid, which may be used for blending directly after the polycondensation. The solutions may also after having finished the synthesis of the polylactic acid enantiomers be cooled and stored at ambient temperature as heterogeneous dopes, which can then later be redissolved by heating prior to performing step a) of the process for producing a polylactic acid stereocomplex composition.

In another embodiment blended post-polycondensation dopes are heated to a temperature at which two processes can proceed simultaneously, i.e. redissolving polylactic acid enantiomers and racemic crystallizing followed by precipitating the stereocomplex. In all embodiments the mixture can be cooled after blending, the stereocomplex obtained can be isolated, for instance by filtration, and purified.

The mixture of step b) containing the precipitated polylactic acid stereocomplex, and possibly unreacted or excess enantiomers, is filtered to remove the free solvent. Only up to 10-20% of the solvent is separated, whereas the major part remains in the precipitated crystalline polymer mass. Said remaining solvent part can be removed by a multiple washing procedure using an organic solvent which is miscible with the high-boiling solvent and wherein the polylactic acid does not dissolve. Alcohols such as ethanol and methanol can suitably be used for this purpose. Washing can be repeated until the solvent is sufficiently removed. When a decrease of the thermal properties of the dry composition measured by DSC is observed, high-boiling solvent may still be present. In particular, the glass transition temperature determined in cycle II heating in DSC (TgII) is most sensitive to the presence of the high-boiling solvent in the polylactic acid stereocomplex composition. A well-purified polylactic acid stereocomplex composition should give TglI at least as high as for pure polymers.

According to the invention, after washing with ethanol or methanol (usually repeated 3 to 5 times) a final washing step can be applied with petroleum ether, or in sequence with acetone and petroleum ether, to allow for the complete removal of the high-boiling solvent, improving the uniformity of the obtained polylactic acid stereocomplex powder and aiding the final drying of the composition. After the final washing, the polylactic acid stereocomplex composition can be air-dried, optionally followed by vacuum-drying for completely removing any of the washing solvents.

The polylactic acid enantiomers can be prepared by methods known in the art, such as from lactide enantiomers (ROP process) and from azeotropic polycondensation of D- and L-lactic acid. The polylactic acids as used as starting material for step a) can have low molecular weight (i.e. oligomers) to high molecular weight, though M̅_{w} up to 200,000 is preferred. Molecular weight of polymers in this range allows polymer concentration higher than 20% at a temperature above 90 °C. Lower concentrations are preferred (15 -20%, or even less than 15%) for polymers having molecular weight higher than 200,000 to avoid agitation problems due to high dynamic viscosity.

The D- and L-enantiomers do not necessary need to have similar molecular weights, but similar molecular weights usually render a better quality of the polylactic acid stereocomplex.

To obtain polylactic acid stereocomplex composition with high content of the high melting phase, the proportion between poly L-lactic acid : poly D-lactic acid enantiomers should be kept in the range from 60 : 40 to 40 : 60, preferably about 50 : 50. Small deviations of the proportions may have a minor influence on the properties of the final product.

It is advantageously to prepare polylactic acid stereocomplex composition according to the invention by the direct use of post-reaction dopes obtained as result of the azeotropic poly-condensation of the lactic acid enantiomers in a high-boiling solvent to give solutions of poly L-lactic acid and poly D-lactic acid, after which the enantiomeric polylactic acids are blended. In this manner the separation and purification of the polylactic acid enantiomers can be avoided

This invention therefore also concerns the manufacture of polylactic acid stereocomplex by heating a mixture of post-polycondensation dopes of poly L-lactic acid and poly D-lactic acid, which are obtained in a high-boiling solvent such as diphenyl ether or dichlorobenzene.

High-boiling solvents according to the invention are solvents that are capable of dissolving individual polylactic acid enantiomers at temperature above 90 °C and which render quick crystallization and precipitation of polylactic acid stereocomplexes when the solution is cooled to ambient temperature. During the mixing of polylactic acid enantiomers, the racemic crystallization and precipitation of polylactic acid stereocomplex proceed at higher temperature and therefore prior to the crystallization of the single enantiomers. High-boiling organic solvents which are frequently used in the azeotropic polycondensation for synthesizing polylactic acid (which polycondensation normally proceeds at 130 - 150 °C) may be used in the preparation of polylactic acid stereocomplexes, notably diphenyl ether and o-dichlorobenzene. Suitable high-boiling solvents according to the invention do not give gelatinization of the solutions at cooling to ambient temperature.

The term "post-polycondensation dope" refers to the solutions or the heterogenous post-polycondensation masses of poly L-lactic acid and poly D-lactic acid, which are obtained by a condensation polymerization process from L- and D-lactic acid, respectively, and which can be used in the above described step a) of manufacturing the stereocomplex. The stereocomplex is a physical molecular mixture of two enantiomeric forms of polylactic acid, but its formation in post-polycondensation dopes proceeds in the presence of other post-polycondensation dope components such as residual oligomers of L- or/and D-lactic acid. Such conditions do not prevent the formation of a molecular mixture of both polylactic acids as well as initiate the three-dimensional structure of the stereocomplex. The stereocomplex, which according to the present process is obtained as a powder is insoluble in the solvent and forms the solid phase. The stereocomplex has different physical properties than the poly L-lactic acid and poly D-lactic acid from which it is made, particularly regarding a higher melting point and higher thermal resistance.

The most important behavior of heterogeneous post-polycondensation dopes, is their ability to produce a high quality molecular mixture of both polylactic acid enantiomers under conditions enabling simultaneous redissolving of the enantiomers and precipitation of the stereocomplex. These conditions provide best conditions to form the high energy hydrogen bonds to form the stereocomplex. The homogenization of the enantiomer mixture by stirring at 50 to 500 rpm enhances the stereocomplex formation by providing uniform distribution of both enantiomers.

The mixing of the polylactic acid enantiomers in the high-boiling solvents basically proceeds above 90 °C. The racemic crystallization and precipitation of polylactic acid stereocomplexes can proceed during step a) of the process (if the temperature is sufficiently low) or after the mixing during cooling of the mixture. In case of mixing polylactic acid enantiomers in diphenyl ether, the precipitation of polylactic acid stereocomplexes becomes observable at 135-130 °C and is significantly intensified at 120 °C and lower. In contrast, 20% solutions of the single enantiomers grow distinctly dull below 70 - 80 °C and an intensive and practically complete precipitation occurs below 40 °C.

The temperature of mixing polylactic acid enantiomers in the high-boiling solvent is preferably lower than the boiling temperature of the solvent. Temperatures above 145 -150 °C are less preferred because of possible increase of degradation of the dissolved enantiomers. To prevent substantial degradation, the enantiomers' mixing temperature in the high-boiling solvents should not exceed 160 °C (a preferred range is 90 to 160 °C) and should most preferably be kept in the range of 100 to 140 °C, since above 100 °C the selectivity and yield of the process increase.

Using the conditions of the invention polylactic acid stereocomplexes are obtained by a quick and selective racemic crystallization under precipitation of the formed polylactic acid stereocomplexes, which predominates over the precipitation of the individual enantiomers. Such procedure can result in obtaining a stereocomplex of polylactic acid in the form of a fine powder and offers the possibility to control the grain size in the range of 1 - 10 µm under conditions of simultaneous redissolving the enantiomers and precipitating the stereocomplex. During a standard cooling of the enantiomer mixture to ambient temperature, preferably to 40 - 25 °C, the polylactic acid stereocomplex is first precipitated and the individual enantiomers are only thereafter below 70 - 80 °C crystallized and precipitated, which process only below 40 °C becomes relevant in that it leads to completion.

The invention provides a method for selective and effective racemic crystallization of a wide range of polymer concentrations. More particularly, the invention makes possible crystallization of polylactic acid as a stereocomplex from solutions containing polylactic acid concentration above 10%, preferably above 15%. A very suitable concentration range is 20 - 25%.

It is another object of the invention to provide a process wherein each of L-lactic acid and D-lactic acid is condensed by an azeotropic polycondensation in a high-boiling solvent having a boiling point above 100 °C using a heterogeneous catalyst to give a solution of poly L-lactic acid and a solution of poly D-lactic acid (i.e. the post-polycondensation dopes), after which the said solutions are separated from the heterogeneous catalyst and the obtained catalyst-free solutions of poly L-lactic acid and poly D-lactic acid are thereafter mixed in step a). Such polycondensation reaction as such and suitable heterogeneous catalysts, i.e. metallic tin or inorganic tin compounds therefore are known in the art.

These post-polycondensation dopes can directly be used in the process of making the stereocomplex, or they can be cooled to ambient temperature and/or stored as stable heterogeneous post-polycondensation dopes. Thereafter, when needed for the process of the invention, the poly L-lactic acid and/or poly D-lactic acid can be redissolved by heating prior to mixing in step a), or the heterogeneous dopes can be blended and then heated to perform step a).

If the dopes contain diphenyl ether solvent, redissolving the enantiomers starts at about 110 °C and distinctly accelerates above 130 °C. The process, depending on simultaneous redissolving the enantiomers and precipitating the stereocomplex, is preferably performed at 120-130 °C for 30-90 minutes, preceded by a controlled heating time between 100 °C, and the final mixing temperature (about 120-130 °C) takes 10 to 60 minutes. This is illustrated in examples 5-7.

It is preferred that the initial post-polycondensation dopes of both enantiomers contain not less than 15 wt% of each form of polylactic acid.

The polylactic acid stereocomplex of the invention can be obtained as a fine powder with a high melting enthalpy (ΔHm₂) and a high content of high melting phase (part of ΔHm₂ in total melting enthalpy, ΔHm₁ + ΔHm₂). The product has further a fine granulation as a result of the self-precipitation of polylactic acid stereocomplex from the solution, and the grains can be obtained of which the size of the single grain does not exceed 10 µm. Polylactic acid stereocomplex compositions obtained according to the method of claim 9 show very uniform granulation. Up to 90 to 95% weight of the polylactic acid stereocomplex composition has grain size below 10 µm (1-10 µm, average 4 -6 µm), with the agglomerates of the grains having a size below 100 µm. 90 -100% of the polylactic acid stereocomplex obtained is high-melting having at a melting enthalpy of 60-85 J/g (calculated from the whole high melting endotherm). The peak temperature of the high melting endotherm is at least 205 °C, preferably above 210 °C. The polylactic acid stereocomplex powders according to the invention have an onset temperature for melting above 185 °C, preferably above 195 °C. It is possible to obtain polylactic acid stereocomplex having an onset temperature of about 200 °C by annealing the powder at 180-200 °C, for example during 1 hour at 190 °C. A certain correction and sharpening of the endothermic high-temperature melting can be achieved, accompanied by increase of Tₒₙₛₑₜ and ΔHm₂.

The polylactic acid stereocomplex compositions according to the invention can be used in melt-processing at 220 -240 °C. After a proper thermal processing of the products it is possible to provide a material with a high content of polylactic acid stereocomplex and with the peak of high temperature melting Tm₂> 220 °C. The polylactic acid stereocomplex compositions can be used as a crystalline micro-additive (such as filler or crystallization nucleus) to polymers in e.g. melt processing at temperatures up to 200 °C. They are especially convenient to accelerate polylactic acid crystallization.

The invention is further illustrated by examples showing some non-limitative methods of carrying out the process, the conditions used and the results obtained. The following analytical methods were used:
Determination of inherent viscosity of poly(lactic acids) was carried out in chloroform at 25 °C using suitable polylactic acid with concentration of 0.1 g/dL in an Ubbelohde viscometer equipped with capillary of 0A and k = 0.00498.
Determination of molecular properties of polylactic acid was carried out in chloroform using a Hewlett-Packard GPC system equipped with a refractometric detector and an analytic column of 60 cm PL gel Mixed D of Polymer Labs.
Determination of thermal properties of polylactic acid was carried out using a Perkin-Elmer DSC-2 equipped with digital in/on in nitrogen atmosphere with temperature change rate of 20 °C/min for samples of 12 mg. The change temperatures of Tg (glass point), Tcc (cold crystallization temperature), Tm (melting point), as well as change heat of ΔHcc (cold crystallization enthalpy) and ΔHm (melting heat) were estimated. Optical specific rotations of [α]_{25D} for enantiomers were determined in chloroform using polymer concentration of 1 g/dL at 25 °C on a Krüss P 1000 polarimeter.

The polylactic acid stereocomplex composition samples were not fully dissolvable in chloroform and did not show a cold crystallization transition.

ΔHm₁ and ΔHm₂ are melting enthalpies which are determined from the whole endotherms in relation to the base line. Tg_{II} is the glass transition temperature estimated from the second DSC run.

### Preparation of PLA enantiomers solution (dopes) by azeotropic polycondensation of lactic acid enantiomers

145 g of linear oligo L-lactic acid and 145 g of linear oligo D-lactic acid were introduced separately into independent reactors. To each reactor 500 g of diphenyl ether as a solvent and 1.8 g of powdered metallic tin as a catalyst were introduced. The mixtures were heated at boiling temperature 140 °C under reduced pressure of 0.025 - 0.035 bar. The released water was azeotropically removed using molecular sieves 4A in a circulation line of the solvent. The polycondensation was carried out for 40-50 hours (in different trials) giving separate poly L-lactic acid and poly D-lactic acid solutions containing 20.6-24.3 wt% of polymer with inherent viscosity of 1.09-1.26 dl/g. The Mw of the polymers ranged from 100,000 to 180,000, and their enantiomeric purity was [α]_{25D} = -157.5° for L-PLA (poly L-lactic acid) enantiomer and +157.5° for D-PLA (poly D-lactic acid) enantiomer. The post-reaction solutions (dopes) were hot-filtered to separate the catalyst and then cooled to 25 °C to obtain the heterogeneous form of post-reaction dopes. Before use for mixing, the heterogeneous post-reaction dopes were stored at 25 °C for 1-6 months. Isolated and purified polymer samples (pure PLA enantiomers) for analytical measurements were crystalline powders showing melting temperature Tm = 162-164 °C and glass transition temperature Tg_{II} (second DSC scan) of 58-60 °C.

### Example 1

Polylactic acid stereocomplex composition was prepared using poly L-lactide from Teijin Techno Product, Ltd., characterized by inherent viscosity of 1.35 dl/g, Mw = 205.000, Tm = 173 °C, Tg_{II} = 60 °C and optical purity [α]_{25D} = -159°. The poly D-lactic acid component used was the post-reaction dope containing 21.5 wt% of polymer with inherent viscosity of 1.09 dL/g.

The mixing of the enantiomers was carried out in a glass reactor placed in an oil bath, equipped with stirrer, reflux condenser, and flange for N₂ inlet. 20 g of poly L-lactide were introduced to the reactor containing 92 g of diphenyl ether and heated under nitrogen up to 120 °C. The mixture was stirred for 4 hours to swell the polymer with solvent, the temperature was then raised to 140 °C, and the mixture was stirred for 2 hours to obtain solution of L-PLA enantiomer. The solution was heated up to 150 °C when 93 g of the post-reaction dope of D-PLA enantiomer were added and the resulting mixture was heated at 150 °C for 30 minutes with homogenization of by stirring at 100 rpm under nitrogen. The resulting polymer concentration was 19.5 wt% and the weight ratio of the enantiomers was about 50 : 50. The obtained mixture was transferred into a container and cooled to 25 °C. The cooled mixture had a form of a soft, white paste with a small amount of free solvent. It was manually crumbled, separated from the solvent by filtration and purified using 4 washings with about 400 cm³ of 96 wt% ethanol and 3 washings with 300 cm³ of acetone. The product was air-dried and dried under vacuum at 50 °C to obtain about 35.5 g of polylactic acid stereocomplex composition in the form of a white powder. The product was characterized by thermal properties: Tm₁ = 160 and 176 °C, Tm₂ = 219 °C, ΔHm₁ = 5.0 J/g, and ΔHm₂ = 75.2 J/g (i.e. 93.8% of total melting enthalpy) during first DSC heating. Glass transition temperature determined in the second DSC heating was Tg_{II} = 59.5 °C.

A sample of the product was extruded to a monofilament at 230 °C (Melt Flow Tester apparatus; spinneret diameter of 1.0 mm; loading of 2.16 kg) which was annealed at 220 °C for 1 h giving a monofilament sample with Tm₂ = 237 °C and ΔHm₂ = 66.3 J/g (94.6% of total melting enthalpy).

The similarly obtained polylactic acid stereocomplex composition, but with mixing step at 140 °C, was a white powder with thermal properties: Tm₁ = 158 and 169 °C, Tm₂ = 219.5 °C, ΔHm₁ = 4.5 J/g, ΔHm₂ = 71 J/g (94% of total melting enthalpy), and Tg_{II} = 58.5 °C.

### Example 2

Polylactic acid stereocomplex composition was obtained using L-PLA post-reaction dope containing 21.9 wt% of the polymer with inherent viscosity of 1.10 dUg and D-PLA post reaction dope containing 21.5 wt% of the polymer with inherent viscosity of 1.09 dUg. Portions of about 25 g of L-PLA post-reaction dope and D-PLA post-reaction dope were introduced into separate flasks, each equipped with stirrer, reflux condenser and nitrogen inlet. The flasks were placed in an oil bath at 140 °C and the post-reaction dopes were redissolved by heating for 30 minutes with homogenization of 100 rpm under nitrogen. Then the oil bath temperature was lowered to 100 °C and 22.8 g of L-PLA solution and 23.2 g of D-PLA solution were introduced into the mixing reactor and the mixture of solutions (resulting polymer concentration about 21.7 wt% and weight ratio about 50 : 50) was mixed at 100 °C for 30 minutes with homogenization of 100 rpm under nitrogen to give the final mixture in the form of a white dispersion which was transferred into a container and cooled to 25 °C. The cooled mixture, having the form of a dispersion-like white paste, was separated from the solvent by filtration and purified using 4 washings with about 100 cm³ of 96 wt% ethanol and 3 washings with about 70 cm³ of acetone. The product was dried in air and under vacuum at 50 °C to give 8.5 g of a white powder. The thermal properties of this product were as follows: Tm₁ = 158.5 and 171.5 °C, Tm₂ = 210.0 °C, ΔHm₁ = 5.0 J/g, ΔHm₂ = 73.0 J/g ( 93.6% of total melting enthalpy) and Tg_{II} = 51.0 °C.

The above process was repeated with addition of 20.7 g of pure diphenyl ether solvent to the reactor to perform the step of enantiomer mixing with final polymer concentration of 15.0 wt%. The powder-like product obtained showed the thermal properties: Tm₁ = 158.5 and 171.5 °C, Tm₂ = 208.5 °C, ΔHm₁ = 6.0 J/g, ΔHm₂ = 73.0 J/g (92.4% of total melting enthalpy) and Tg_{II} = 56.5 °C. The onset temperature of high temperature melting endotherm was Tₒₙₛₑₜ= 188 °C. The sample of the powder was annealed at 140 °C for 1 h. No changes in its thermal properties were found. Another sample, annealed at 190 °C for 1 h, showed a distinctly sharper high temperature endotherm characterized by Tm₂ = 206 °C (with inflexion point at 226 °C), and ΔHm = 75 J/g (99.7% of total melting enthalpy). The onset point was Tₒₙₛₑₜ=195 °C.

### Example 3

The procedure of Example 2 was repeated at temperature of the mixing step of 90 °C and resulting polymer concentration of 15 wt%. The sample of 8 g of the product was obtained in the form of a white powder. It showed thermal properties: Tm₁ = 158.5 and 172.5 °C, Tm₂ = 210.0 °C, ΔHm₁ = 9.9 J/g, ΔHm₂ = 68.5 J/g (87.3% of total melting enthalpy) and Tg_{II} = 55.5 °C.

A sample of the powder was extruded at 220 °C to a monofilament which showed Tm₂ = 211 and 229 °C and ΔHm₂ = 49.5 J/g (96.3% of total melting enthalpy). After annealing at 220 °C for 1 h and then at 140 °C for 1 h, the monofilament showed Tm₂ = 224 and 236.5 °C and ΔHm₂ = 74.6 J/g (92.2% of total melting).

### Example 4

The same post-reaction dopes as of Example 2 were used. 22.8 g of L-PLA post-reaction dope and 23.2 g of D-PLA post-reaction dope were introduced into a reactor which was transferred to an oil bath at 140 °C. The mixture of the dopes was heated for 35 minutes with homogenization of 150 rpm under nitrogen to obtain a homogeneous solution with resulting polymer concentration of 21.7 wt% and enantiomers weight ratio about 50 : 50. The solution was transferred into a container and cooled to 25 °C giving a hard white paste without any free solvent. The paste was crumbled to small pieces and purified similarly as in Example 2 to obtain 8.7 g of the product in form of a white powder. The product showed the thermal properties: Tm₂ = 212.5 °C, ΔHm₁ = 0 J/g, ΔHm₂ = 79.2 J/g and Tg_{II} = 51.5 °C.

An repeated process as above with mixing step at 150 °C, yielded 8.9 g of the product. It showed the following thermal properties: Tm₂ = 213.5 °C, ΔHm₁ = 0 J/g, ΔHm₂ = 75.0 J/g and Tg_{II} = 55.0 °C.

### Example 5

The same post-reaction dopes in same amounts as in Example 2 were used. The reactor with introduced dopes was put in an oil bath at 120 °C. The content was mixed for about 10 minutes under temperature increase from 25 to 120 °C (i.e. about 5 minutes from 100-120 °C) and then for 30 minutes at 120 °C with homogenization at 150 rpm under nitrogen, still keeping the form of a white polymeric dispersion. The dispersion was transferred into a container and cooled to 25 °C. Next, the dispersion-like solid mixture was separated from free solvent by filtration to obtain a powder-like solid which was washed 4 times with about 100 cm³ of 96 wt% ethanol and 3 times with about 70 cm³ of petroleum ether. The product was air-dried and under vacuum at 50 °C to obtain 9.2 g of a white fine powder. This product showed the following thermal properties: Tm₁ = 159.5 and 171.5 °C, Tm₂ = 212.5 °C, ΔHm₁ = 27.4 J/g, ΔHm₂ = 49.1 J/g (64.2% of total melting enthalpy) and Tg_{II} = 59.5 °C. The onset point was Tₒₙₛₑₜ=194 °C.

The above process repeated with the mixing step at 130 °C, produced 9.4 g of a white, fine powder showing the thermal properties: Tm₁ = 159.0 and 171.5 °C, Tm₂ = 213 °C, ΔHm₁ = 12.9 J/g, ΔHm₂ = 62.0 J/g (82.8% of total melting) and Tg_{II} = 60.0 °C The onset temperature was Tₒₙₛₑₜ=195.5 °C.

### Example 6

Using the same post-reaction dopes as in Example 2 and using the procedure of Example 5 the enantiomers mixing step was performed at 120 °C using 137 g of L-PLA post-reaction dope and 139.5 g of D-PLA post-reaction dope. The reactor which contained the dopes was put in an oil bath at 120°C and the mixture was heated under stirring at 150 rpm under nitrogen. Heating time between 100 and 120 °C was about 20 minutes, while it was 30 minutes at 120 °C. The mixture maintained its dispersion form during this time. It was transferred into several small containers and cooled to 25 °C. Each portion of obtained dispersion-like paste was filtered to remove free diphenyl ether and then the powder-like solids underwent different purification processing steps (see washing method in the table). The purified solids were air-dried and under vacuum at 50 °C to obtain differently purified samples in the form of white, fine powders which showed similar melting properties but were differed in the Tg_{II} parameter. Data are given in the Table:

| washing method | Tg_{II} | Tm₂ | ΔHm₂ | |
|---|---|---|---|---|
| | °C | °C | J/g | % |
| Ethanol 96% 4x | 50.5 | 211.0 | 76.9 | 98.7 |
| Acetone 4x | 49.5 | 213.0 | 70.3 | 96.3 |
| Petroleum ether 4x | 52.5 | 211.0 | 75.8 | 96.4 |
| Ethanol 4x + acetone 3x | 57.0 | 211.5 | 77.5 | 97.4 |
| Ethanol 4x + petroleum ether 2x | 60.0 | 212.5 | 75.1 | 94.5* |
| Ethanol 4x + acetone 3x + petrol. ether 2x | 59.5 | 212.5 | 71.6 | 94.2 |

| | | | | |
|---|---|---|---|---|
| *- Tₒₙₛₑₜ=194.5 °C | | | | |

### Example 7

The used heterogeneous post-reaction dopes were the dope containing 22.6 wt% of L-PLA with inherent viscosity of 1.25 dl/g and the dope containing 22.4 wt% of D-PLA with inherent viscosity of 1.21 dl/g. Portions of 221 g of L-PLA post-reaction dope and 223 g of D-PLA post-reaction dope were introduced into a reactor and transferred to an oil bath at 110 °C. The mixture was heated to 100 °C under homogenization at 150 rpm under nitrogen. Then the oil bath was gradually heated to 130 °C to obtain the adequate heating of the stirred mixture in a period of 50 minutes. The stirring of the dispersion-like mixture was continued at 130 °C for 30 minutes and then the dispersion was transferred into a container and cooled to 25 °C. Then the powder-like solid was filtered off from the diphenyl ether solvent and the solid was purified by 4 washings with 800 cm³ of 96 wt% ethanol and 3 washings with 500 cm³ of petroleum ether. The purified solid was dried in air and under vacuum at 50 °C to obtain 94 g of white fine powder. Using a 0.1 mm mesh sieve 86 g of a powder fraction were obtained with individual particle size 2.5 - 8.5 µm, or in agglomerates with prevailing size up to 60 µm.

The product showed the following thermal properties: Tm₂ = 214.5 °C, ΔHm₁ = 0 J/g, ΔHm₂ = 82.7 J/g and Tg_{II} = 59.0 °C; Tₒₙₛₑₜ=198 °C.

A similar fine powdered product was obtained in a procedure as above, but with the other pair of the post-reaction dopes containing respectively 24.3 wt% of L-PLA with inherent viscosity of 1.26 dl/g (206 g) and 20.6 wt% of D-PLA with inherent viscosity of 1.13 dl/g (243 g). That product showed the thermal properties: Tm₂ = 214.5 °C, ΔHm₁ = 0 J/g, ΔHm₂ = 80.1 J/g and Tg_{II} = 59.0 °C; Tₒₙₛₑₜ=193 °C.

## Claims

1. A process for producing a polylactic acid stereocomplex composition as a powder, comprising the steps;
a) mixing poly L-lactic acid and poly D-lactic acid in the presence of a high-boiling solvent having a boiling point above 100 °C wherein the polymer concentration is at least 15 wt%, and the weight ratio of poly L-lactic acid : poly D-lactic acid is from 60 : 40 to 40 : 60, at a temperature above 90 °C for 1-120 minutes;
b) bringing the mixture of step a) to a temperature between room temperature and 120 °C to obtain solid material;
c) isolating the solid material from the solvent to give the polylactic acid stereocomplex as a powder.

2. The process according to claim 1 wherein the high-boiling solvent is selected from diphenyl ether and o-dichlorobenzene.

3. The process according to claim 1or 2 wherein in step a) the polymer concentration is 20-25 wt%.

4. The process according to any one of claims 1 to 3 wherein the weight ratio of poly L-lactic acid : poly D-lactic acid is about 50 : 50.

5. The process according to any one of claims 1 to 4 wherein step a) is performed for 30 to 90 min.

6. The process according to any one of claims 1 to 5, wherein step a) is performed at 90 to160 °C, preferably at 100 to 140 °C

7. The process according to any one of claims 1 to 6, wherein the solid material is purified from the solvent in step c) by washing with a liquid wherein the solid material is insoluble, followed by washing with petroleum ether or by washing with acetone followed by washing with petroleum ether.

8. The process according to any one of claims 1-7 wherein each of L-lactic acid and D-lactic acid is condensed by an azeotropic polycondensation in a high-boiling solvent having a boiling point above 100 °C using a heterogeneous catalyst to give a solution of poly L-lactic acid and a solution of poly D-lactic acid, after which the said solutions are separated from the heterogeneous catalyst and the obtained catalyst-free solutions of poly L-lactic acid and poly D-lactic acid are thereafter mixed in step a).

9. The process according to claim 8 wherein the catalyst-free solutions of poly L-lactic acid and/or poly D-lactic acid are cooled and/or stored, and thereafter used in step a).

## Patentansprüche

1. Verfahren zum Herstellen einer Polymilchsäure-Stereokomplexzusammensetzung als ein Pulver, mit den Schritten:
a) Mischen einer Poly-L-Milchsäure und einer Poly-D-Milchsäure bei einer Temperatur von mehr als 90°C für 1 bis 120 Minuten bei Anwesenheit eines Lösungsmittels mit einem hohem Siedepunkt von mehr als 100°C, wobei die Polymerkonzentration mindestens 15 Gew.-% beträgt und das Gewichtsverhältnis zwischen der Poly-L-Milchsäure und der Poly-D-Milchsäure im Bereich von 60:40 bis 40:60 liegt;
b) Veranlassen, dass die Mischung von Schritt a) auf eine Temperatur zwischen Raumtemperatur und 120°C gebracht wird, um ein festes Material zu erhalten; und
c) Trennen des festen Materials vom Lösungsmittel, um den Polymilchsäure-Stereokomplex als ein Pulver zu erhalten.

2. Verfahren nach Anspruch 1, wobei das Lösungsmittel mit hohem Siedepunkt aus Diphenylether und o-Dichlorbenzol ausgewählt wird.

3. Verfahren nach Anspruch 1 oder 2, wobei die Polymerkonzentration in Schritt a) 20 - 25 Gew.-% beträgt.

4. Verfahren nach einem der Ansprüche 1 bis 3, wobei das Gewichtsverhältnis zwischen der Poly-L-Milchsäure und der Poly-D-Milchsäure etwa 50:50 beträgt.

5. Verfahren nach einem der Ansprüche 1 bis 4, wobei Schritt a) für 30 bis 90 Minuten ausgeführt wird.

6. Verfahren nach einem der Ansprüche 1 bis 5, wobei Schritt a) bei 90 bis 160°C, vorzugsweise bei 100 bis 140°C, ausgeführt wird.

7. Verfahren nach einem der Ansprüche 1 bis 6, wobei das feste Material in Schritt c) vom Lösungsmittel gereinigt wird durch Waschen mit einer Flüssigkeit, wobei das feste Material unlöslich ist, anschließendes Waschen mit Petrolether oder Waschen mit Aceton und anschließendes Waschen mit Petrolether.

8. Verfahren nach einem der Ansprüche 1 bis 7, wobei die L-Milchsäure und die D-Milchsäure jeweils durch eine azeotrope Polykondensation in einem Lösungsmittel mit einem hohen Siedepunkt von mehr als 100°C unter Verwendung eines heterogenen Katalysators kondensiert werden, um eine Lösung von Poly-L-Milchsäure und eine Lösung von Poly-D-Milchsäure zu erhalten, woraufhin die erhaltenen Lösungen vom heterogenen Katalysator getrennt werden und die erhaltenen katalysatorfreien Lösungen der Poly-L-Milchsäure und der Poly-D-Milchsäure anschließend in Schritt a) gemischt werden.

9. Verfahren nach Anspruch 8, wobei die katalysatorfreien Lösungen der Poly-L-Milchsäure und/oder der Poly-D-Milchsäure gekühlt und/oder gelagert und anschließend in Schritt a) verwendet werden.

## Revendications

1. Procédé de production d'une composition de stéréocomplexe d'acide polylactique sous forme de poudre, comprenant les étapes consistant à :
a) mélanger de l'acide poly(L-lactique) et de l'acide poly(D-lactique) en présence d'un solvant de point d'ébullition élevé ayant un point d'ébullition supérieur à 100 °C, la concentration en polymère étant d'au moins 15 % en poids et le rapport en poids de l'acide poly(L-lactique):acide poly(D-lactique) étant compris dans la plage allant de 60:40 à 40:60, à une température supérieure à 90 °C pendant 1 à 120 minutes ;
b) amener le mélange de l'étape a) à une température comprise dans la plage allant de la température ambiante à 120 °C pour obtenir une matière solide ;
c) isoler la matière solide du solvant pour donner le stéréocomplexe d'acide polylactique sous forme de poudre.

2. Procédé selon la revendication 1, dans lequel le solvant de point d'ébullition élevé est choisi parmi l'éther diphénylique et l'o-dichlorobenzène.

3. Procédé selon la revendication 1 ou 2, dans lequel dans l'étape a), la concentration en polymère est comprise dans la plage allant de 20 à 25 % en poids.

4. Procédé selon l'une quelconque des revendications 1 à 3, dans lequel le rapport en poids de l'acide poly(L-lactique):acide poly(D-lactique) est d'environ 50:50.

5. Procédé selon l'une quelconque des revendications 1 à 4, dans lequel l'étape a) est effectuée pendant 30 à 90 minutes.

6. Procédé selon l'une quelconque des revendications 1 à 5, dans lequel l'étape a) est effectuée dans la plage allant de 90 à 160 °C, de préférence de 100 à 140 °C.

7. Procédé selon l'une quelconque des revendications 1 à 6, dans lequel la matière solide est purifiée du solvant dans l'étape c) par un lavage avec un liquide dans lequel la matière solide est insoluble, suivi par un lavage avec de l'éther de pétrole ou par un lavage avec de l'acétone suivi par un lavage avec de l'éther de pétrole.

8. Procédé selon l'une quelconque des revendications 1 à 7, dans lequel l'acide L-lactique et l'acide D-lactique sont chacun condensés par une polycondensation azéotropique dans un solvant de point d'ébullition élevé ayant un point d'ébullition supérieur à 100 °C en utilisant un catalyseur hétérogène pour donner une solution d'acide poly(L-lactique) et une solution d'acide D-polylactique, après quoi lesdites solutions sont séparées du catalyseur hétérogène et les solutions exemptes de catalyseur d'acide poly(L-lactique) et d'acide poly(D-lactique) obtenues sont ensuite mélangées dans l'étape a).

9. Procédé selon la revendication 8, dans lequel les solutions exemptes de catalyseur d'acide poly(L-lactique) et/ou d'acide poly(D-lactique) sont refroidies et/ou stockées, puis utilisées dans l'étape a).
